# EUROPEAN PATENT APPLICATION

(11) **EP 4 613 673 A1**
(43) Date of publication of application: **10.09.2025**
(21) Application number: 23888308.6
(22) Date of filing: 22.08.2023
(51) Int. Cl.: B65G 1/00, B65G 1/137, B65G 35/00

(54) **ARTICLE TRANSPORT FACILITY**

(30) Priority: 08.11.2022 JP 2022178920
(71) Applicant: Daifuku Co., Ltd., Osaka-shi, Osaka 555-0012 (JP)
(72) Inventor: YOSHINAGA, Kazuharu, Gamo-gun, Shiga 529-1692 (JP); UCHIDA, Masayuki, Gamo-gun, Shiga 529-1692 (JP); NOGAMI, Shohei, Gamo-gun, Shiga 529-1692 (JP); TAKAGI, Daiki, Gamo-gun, Shiga 529-1692 (JP)
(74) Representative: Grosse Schumacher Knauer von Hirschhausen
(86) International application number: PCT/JP2023/030072
(87) International publication number: WO 2024/100953

(57) **Abstract**

Provided is an article transport facility including a first straight route (R1) and a second straight route (R2) that are parallel to each other, and a first lifter (L1) and a second lifter. The direction in which a transport vehicle (V) travels along the first straight route (R1) and the direction in which the transport vehicle (V) travels along the second straight route (R2) are set to be opposite to each other. The first lifter (L1) connects an end portion of the first straight route (R1) on a straight route first side (X1) to an end portion of the second straight route (R2) on the straight route first side (X1), and the second lifter connects an end portion of the first straight route (R1) on a straight route second side (X2) to an end portion of the second straight route (R2) on the straight route second side (X2). The first lifter (L1) and the second lifter each include a lifting platform (La) on which the transport vehicle (V) can be placed. The lifting platform (La) is larger than a turning locus of the transport vehicle (V) that executes a turning operation, as viewed in an up-down direction.

## Description

### Technical Field

The present invention relates to an article transport facility that includes a plurality of travel floors arranged in an up-down direction and a transport vehicle that transports articles by traveling on the travel floors.

### Background Art

An example of such an article transport facility is disclosed in JP 6833983B (Patent Document 1). Hereinafter, reference numerals shown in parentheses in the description of the background art relate to Patent Document 1.

The facility disclosed in Patent Document 1 includes a lifter (20) that raises and lowers a transport vehicle (30) between different floors (40, 41). When using the lifter (20) to move to a different floor, the transport vehicle (30) has a part (32) that engages a part (116) of the lifter (20) when the transport vehicle (30) enters the lifter (20). The transport vehicle (30) is then raised and lowered by the lifter (20) while engaged therewith.

### Prior Art Documents

### Patent Documents

Patent Document 1: JP 6833983B

### Disclosure of the Invention

### Problem to be Solved by the Invention

As described above, in the facility of Patent Document 1, the part (32) of the transport vehicle (30) is engaged with the part (116) of the lifter (20) while the transport vehicle (30) is being raised and lowered by the lifter (20). Thus, the posture of the transport vehicle (30) is the same on the departure floor and the arrival floor. Accordingly, in the case where the transport vehicle (30) moves forward into the lifter (20) on the departure floor, the transport vehicle (30) needs to reverse out from the lifter (20) on the arrival floor. Since such a transport vehicle normally moves forward, there is a problem in that the transport vehicle has difficultly moving off smoothly on the arrival floor in a situation where it is initially required to reverse.

In view of the above situation, it is desirable to realize a technology that enables a transport vehicle to move off smoothly on the arrival floor in an article transport facility that includes a plurality of travel floors.

### Means for Solving Problem

An article transport facility including:
a plurality of travel floors arranged in an up-down direction;
at least one transport vehicle configured to transport an article by traveling on the travel floors;
a straight route provided on each of the travel floors, and along which the at least one transport vehicle travels straight; and
a pair of a first lifter and a second lifter configured to raise and lower the at least one transport vehicle between the travel floors,
the at least one transport vehicle being configured to travel straight and to change direction by executing a turning operation for turning at a current position around an axis extending in the up-down direction,
the straight routes provided on a pair of the travel floors adjacent to each other in the up-down direction respectively being a first straight route and a second straight route,
the first straight route and the second straight route being parallel to each other, and a direction in which the at least one transport vehicle travels along the first straight route and a direction in which the at least one transport vehicle travels along the second straight route being set to be opposite to each other,
the at least one transport vehicle on the first straight route traveling toward a straight route first side, and the at least one transport vehicle on the second straight route traveling toward a straight route second side,
the first lifter being configured to connect an end portion of the first straight route on the straight route first side to an end portion of the second straight route on the straight route first side,
the second lifter being configured to connect an end portion of the first straight route on the straight route second side to an end portion of the second straight route on the straight route second side,
the first lifter and the second lifter each including at least one lifting platform configured to have the at least one transport vehicle placed thereon, and
the at least one lifting platform being larger than a turning locus of the at least one transport vehicle that executes the turning operation, as viewed in the up-down direction.

According to the present configuration, the transport vehicle is able to prepare in advance for moving off on the arrival floor by performing the turning operation while being raised and lowered by the lifters. The transport vehicle is thus able to smoothly move off on the arrival floor. Also, according to the present configuration, the lifting platforms of the lifters are larger than the turning locus of the transport vehicle as viewed in the up-down direction. Thus, the transport vehicle is able to appropriately perform the turning operation even while being raised and lowered by the lifters.

Further features and advantages of the technology according to the present disclosure will become apparent from the following description of exemplary and non-limiting embodiments with reference to the drawings.

### Brief Description of the Drawings

FIG. 1 is a plan view showing first and second travel floors of an article transport facility.
FIG. 2 is an illustrative diagram showing a travel operation of transport vehicles.
FIG. 3 is an illustrative diagram showing transport vehicles circulating through the floors.
FIG. 4 is an illustrative diagram showing a transport vehicle moving to a different floor.
FIG. 5 is an illustrative diagram showing the spacing between lifting platforms and the positional relationship between the lifting platforms and the travel floors.

### Best Mode for Carrying out the Invention

An article transport facility includes a plurality of travel floors arranged in an up-down direction and a transport vehicle that transports articles by traveling on the travel floors. Hereinafter, embodiments of the article transport facility will be described with reference to the drawings.

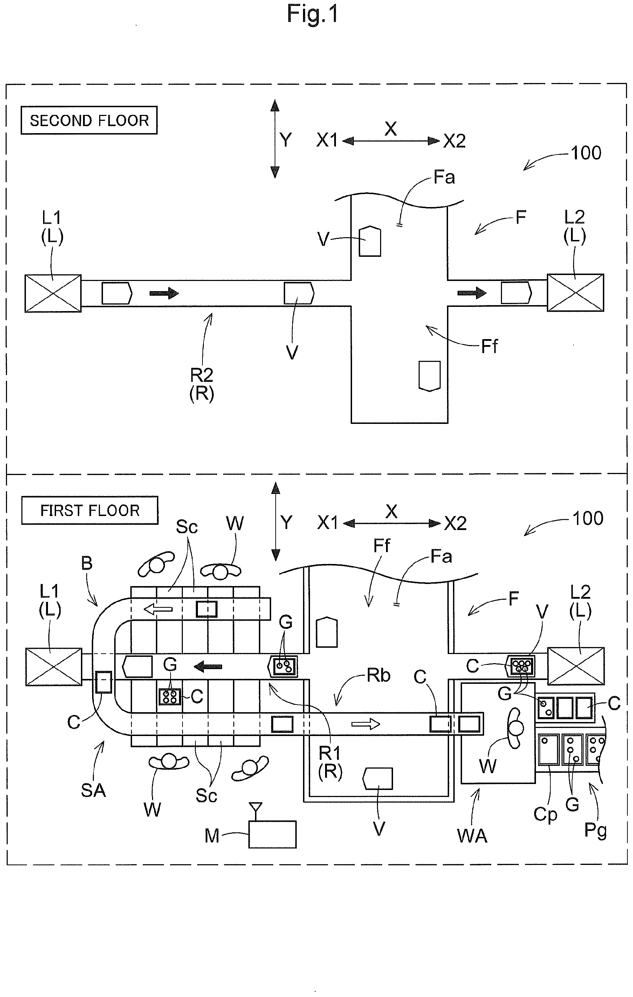

As shown in FIG. 1, an article transport facility 100 includes a plurality of travel floors F arranged in the up-down direction and a transport vehicle V that travels on a travel surface Fa formed on each of the travel floors F. On each travel floor F, a plurality of transport vehicles V travel on the travel surface Fa.

In the present embodiment, the article transport facility 100 further includes a controller M that controls the transport vehicles V. The controller M issues commands such as a transport command and a standby command to the transport vehicles V. The transport command designates the transport source and destination of articles G. The transport vehicles V, having received the transport command, receive articles G at the designated transport source and transport the articles G to the designated transport destination. The standby command designates a standby location. The transport vehicles V, having received the standby command, travel to the designated standby location and wait for the next command or the like.

In the example shown in FIG. 1, the article transport facility 100 includes two travel floors F. The two travel floors shown in FIG. 1 are a first travel floor F and a second travel floor F. The present disclosure is, however, not limited to such a configuration, and the article transport facility 100 may include three or more travel floors F.

The article transport facility 100 includes a straight route R that is provided on each of the travel floors F, and is a travel route along which the transport vehicles V travel straight. The straight routes R of the two travel floors F adjacent to each other in the up-down direction will be referred to as a first straight route R1 and a second straight route R2. In the present example, the first straight route R1 is provided on the first travel floor F. The second straight route R2 is provided on the second travel floor F. Hereinafter, the first straight route R1 and the second straight route R2 may be collectively referred to as "straight routes R" when not particularly distinguishing therebetween.

The straight routes R are constituted as part of the travel floors F. Each travel floor F includes the straight route R and a travel field Ff. In the illustrated example, the first straight route R1 is a single path extending from a work area WA to a sorting area SA described later. When transporting articles G from the work area WA to the sorting area SA, the transport vehicles V travel along the first straight route R1. The travel field Ff is a planer portion of the travel floors F. The transport vehicles V can freely travel through the travel field Ff. In the present embodiment, the straight route R and the travel field Ff partially overlap with each other. In the illustrated example, the travel field Ff is provided between the work area WA and the sorting area SA on the first travel floor F. The first straight route R1 crosses the travel field Ff between the work area WA and the sorting area SA.

Hereinafter, the direction in which the first straight route R1 extends will be referred to as "a straight route direction X", and the direction orthogonal to the straight route direction X as viewed in the up-down direction will be referred to as "a route width direction Y". Note that, in the present embodiment, the second straight route R2 extends in the same direction as the first straight route R1 on a different floor from the floor on which the first straight route R1 is provided. That is, the second straight route R2 extends in the straight route direction X.

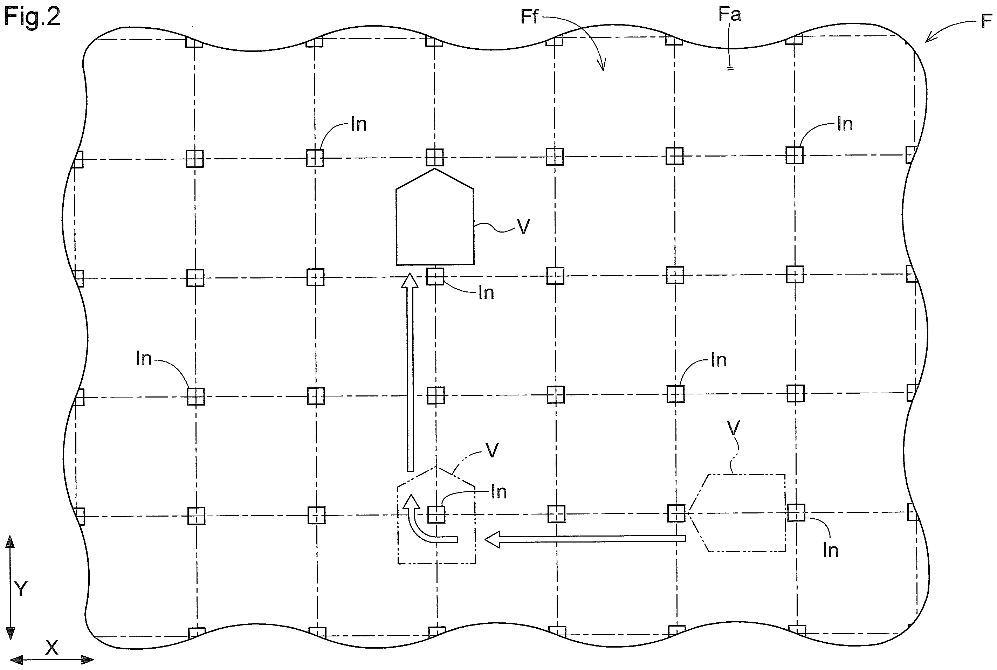

As shown in FIG. 2, the transport vehicles V travel straight and change direction by executing a turning operation for turning at a current position around an axis extending in the up-down direction. By traveling straight and turning, the transport vehicles V can freely travel through the travel field Ff on both the first and second travel floors F.

On the travel surface Fa, the travel routes of the transport vehicles V are set to extend in both the straight route direction X and the route width direction Y. At the intersection of the travel route extending in the straight route direction X and the travel route extending in the route width direction Y, a turning position at which the transport vehicles V are permitted to turn is set.

In the present embodiment, a position information holding section In that holds position information is provided at a plurality of locations on the travel floors F. The travel routes of the transport vehicles V are set to connect the position information holding sections In. The turning positions at which the transport vehicles V are permitted to turn are set based on the positions of the position information holding sections In. In the present embodiment, the transport vehicles V read the position information held by the position information holding sections In provided on the travel floors F, while traveling on the travel floors F, and execute the turning operation at positions corresponding to the position information holding sections In.

In the present embodiment, unique identification information is set for each position information holding section In. In the present example, the identification information for each position information holding section In includes address information indicating the position at which the position information holding section In is provided. The transport vehicles V each include a detection section (not shown) for detecting the position information holding sections In. As a result of this detection section detecting a position information holding section In, the transport vehicle V can grasp the position at which the position information holding section In is provided, that is, its own current position at the time of detection. For example, one-dimensional or two-dimensional codes that hold the identification information can be used as the position information holding sections In. Alternatively, RFID tags (Radio Frequency Identification Tags) that hold the identification information can be used as the position information holding sections In.

As shown in FIG. 1, the article transport facility 100 includes a first lifter L1 and a second lifter L2, which are a pair of lifters L that raise and lower the transport vehicles V between the travel floors F. Hereinafter, the first lifter L1 and the second lifter L2 may be collectively referred to as "lifters L" when not particularly distinguishing therebetween.

The article transport facility 100 includes an article supply section Pg that supplies the articles G, the work area WA in which the articles G supplied from the article supply section Pg are delivered to the transport vehicles V, the sorting area SA in which the articles G transported by the transport vehicles V are sorted, and an empty container collector B that collects empty containers C that arise from the sorting in the sorting area SA. In the present embodiment, the work area WA corresponds to "an article receiving area in which the transport vehicle receives the article". The sorting area SA corresponds to "an article discharging area in which the transport vehicle discharges the article".

In the present embodiment, both the work area WA and the sorting area SA are provided on the first travel floor F. The work area WA and the sorting area SA are not provided on the second travel floor F. That is, the article receiving area (work area WA) in which the transport vehicles V receive the articles G and the article discharging area (sorting area SA) in which the transport vehicles V discharge the articles G are provided on the same travel floor F.

The work area WA is disposed adjacent to both the first straight route R1 and the article supply section Pg. In the present embodiment, the article supply section Pg supplies the articles G to the work area WA with the articles G housed in supply containers Cp. In the work area WA, the articles G housed in the supply containers Cp are unloaded and delivered to the transport vehicles V waiting on the first straight route R1. The delivery of the articles G to the transport vehicles V may be performed with the articles G housed in separate containers C from the supply containers Cp, or the articles G may be delivered directly without being housed in the containers C. In the present embodiment, the work in the work area WA is carried out by workers W. The work may, however, be performed by robots instead of workers W, or by both workers W and robots.

The transport vehicles V transport the articles G or the containers C housing the articles G. In the present embodiment, the transport vehicles V transport the articles G received in the work area WA or the containers C housing the articles G received in the work area WA to the sorting area SA.

The sorting area SA is provided adjacent to the first straight route R1 in the route width direction Y at a location spaced away spaced away from the work area WA. In the sorting area SA, the articles G transported by the transport vehicles V are sorted. Sorting is performed on the basis of predetermined order information. For example, the order information includes various information such as customer information, shipping destination information, and product type information, for example.

In the present embodiment, when the transport vehicles V transport the articles G housed in the containers C to the sorting area SA, unloading of the articles G from the containers C transported by the transport vehicles V is performed in the sorting area SA. That is, sorting includes unloading the articles G from the containers C transported by the transport vehicles V. As a result of the unloading, the articles G are separated from the containers C and empty containers C arises. When the transport vehicles V transport articles G (that are not housed in containers C) to the sorting area SA, the articles G transported by the transport vehicles V are received in the sorting area SA. Articles G that are unloaded from the containers C and articles G that are received are, for example, housed in containers (not shown) that depend on the shipping destination.

The empty container collector B collects the empty containers C that arise from the unloading. The empty container collector B transports the empty containers C along a collection route Rb that extends to a position adjacent to the work area WA. In the present example, the collection route Rb extends into the work area WA. The empty containers C collected by the empty container collector B are transported along the collection route Rb to the work area WA and used in the work performed in the work area WA. The empty container collector B is constituted by a conveyor, for example. The empty container collector B constituted by a conveyor extends along the collection route Rb. In the present embodiment, sorting (including unloading) of the articles G in the sorting area SA is carried out by workers W. The sorting may, however, be performed by robots instead of workers W, or by both workers W and robots.

After delivering the articles G to the sorting area SA, the transport vehicles V ride one of the lifters L to the other travel floor F (second travel floor F in the present example). The transport vehicles V then travel on the second travel floor F and ride the other lifter L back to the travel floor F (first travel floor F in the present example) on which the above-described work area WA and sorting area SA are provided. After returning to the first travel floor F, the transport vehicles V again receive articles G in the work area WA and transport the articles G to the sorting area SA in the manner described above.

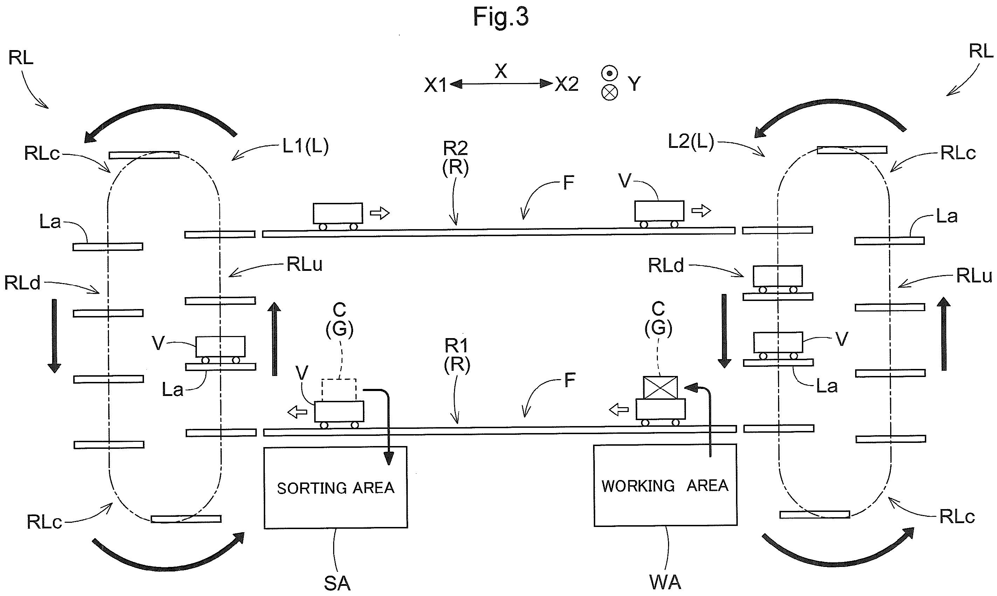

FIG. 3 shows the transport vehicles V traveling back and forth between the floors. As shown in FIG. 3, the first straight route R1 and the second straight route R2 are parallel to each other, and the direction in which the transport vehicles V travel along the first straight route R1 and the direction in which the transport vehicles V travel along the second straight route R2 are set to be opposite to each other. Hereinafter, the side toward which the transport vehicles V on the first straight route R1 travel will be referred to as "a straight route first side X1", and the side toward which the transport vehicles V on the second straight route R2 travel will be referred to as "a straight route second side X2".

The first lifter L1 connects the end portion of the first straight route R1 on the straight route first side X1 to the end portion of the second straight route R2 on the straight route first side X1. The first lifter L1 raises and lowers the transport vehicles V between the end portion of the first straight route R1 on the straight route first side X1 and the end portion of the second straight route R2 on the straight route first side X1.

The second lifter L2 connects the end portion of the first straight route R1 on the straight route second side X2 to the end portion of the second straight route R2 on the straight route second side X2. The second lifter L2 raises and lowers the transport vehicles V between the end portion of the first straight route R1 on the straight route second side X2 and the end portion of the second straight route R2 on the straight route second side X2.

The first lifter L1 is disposed on the straight route first side X1 with respect to the second lifter L2. The second lifter L2 is disposed on the straight route second side X2 with respect to the first lifter L1. The first straight route R1 and the second straight route R2 are disposed between the first lifter L1 and the second lifter L2 in the straight route direction X. Note that at least either the first straight route R1 or the second straight route R2 may be connected to an extension route (not shown) extending along a horizontal plane from a portion to which the first lifter L1 or the second lifter L2 is coupled.

The first lifter L1 and the second lifter L2 each include a lifting platform La on which the transport vehicles V can be placed. The first lifter L1 and the second lifter L2 each raise and lower the transport vehicles V between a plurality of floors with the transport vehicles V placed on the lifting platform La thereof. The first lifter L1 and the second lifter L2 each raise and lower the lifting platform La with the posture of the lifting platform La maintained in a horizontal plane (e.g., posture parallel to a horizontal plane). In the present example, the posture of the lifting platform La is maintained in a horizontal plane in all of an ascending route RLu, a descending route RLd, and a pair of connecting routes RLc described later.

In the present embodiment, the first lifter L1 and the second lifter L2 each include a plurality of lifting platforms La. The first lifter L1 and the second lifter L2 each circulate the lifting platforms La along a predetermined annular route RL.

The annular route RL includes the ascending route RLu that raises the lifting platforms La, the descending route RLd that lowers the lifting platforms La, and the pair of connecting routes RLc that connect the ascending route RLu and the descending route RLd at both sides in the up-down direction. In the present embodiment, the ascending route RLu and the descending route RLd extend in the up-down direction and are arranged in the straight route direction X. Also, in the present example, the pair of connecting routes RLc are formed in an arc shape. Accordingly, the annular route RL is a substantially elliptical route extending in the up-down direction as viewed in the route width direction Y.

In the present embodiment, the first lifter L1 and the second lifter L2 each move the lifting platforms La only toward one side in the direction along the annular route RL. In other words, the direction in which the first lifter L1 and the second lifter L2 each circulate the lifting platforms La is one direction determined in advance.

In the present embodiment, the first lifter L1 is set to raise the transport vehicles V and places the transport vehicles V on only the lifting platforms La of the ascending route RLu. When transport vehicles V are temporarily stored on any of the lifting platforms La of the first lifter L1 as will be described later, the first lifter L1 places the transport vehicles V that are not subject to temporary storage (in other words, the transport vehicles V currently operating) on only the lifting platforms La of the ascending route RLu, for example. In the present example, the first lifter L1 does not place the transport vehicles V on the lifting platforms La of routes (descending route RLd and pair of connecting routes RLc) of the annular route RL other than the ascending route RLu. In other words, the first lifter L1 receives transport vehicles V from the first straight route R1 on the ascending route RLu and delivers the transport vehicles V to the second straight route R2 on the ascending route RLu. That is, the first lifter L1 delivers the transport vehicles V to the second straight route R2 before the transport vehicles V received from the first straight route R1 on the ascending route RLu pass through the connecting routes RLc and the descending route RLd.

The lifting platforms La can also be used as storage sections for storing transport vehicles V. For example, when a transport vehicle V is intentionally not operated in the facility, due to reasons such as the facility being inactive, the battery of a transport vehicle V dying, or a malfunction occurring in a transport vehicle V, the lifting platforms La may be used as storage sections for the transport vehicles V. In such cases, the first lifter L1 is also able to place the transport vehicles V on the lifting platforms La of the descending route RLd and the connecting routes RLc in addition to the ascending route RLu. That is, in the present example, one or more of the lifting platforms La of the first lifter L1 functions as storage sections for temporarily storing transport vehicles V. In this case, for example, the controller M (see FIG. 1) issues, to a specific transport vehicle V to be stored, a standby command that designates one of the lifting platforms La of the first lifter L1 and indicates to wait on the designated lifting platform La.

In the present embodiment, the second lifter L2 is set to lower the transport vehicles V and places the transport vehicles V on only the lifting platforms La of the descending route RLd. When transport vehicles V are temporarily stored on any of the lifting platforms La of the second lifter L2 as will be described later, the second lifter L2 places the transport vehicles V that are not subject to temporary storage (in other words, the transport vehicles V currently operating) on only the lifting platforms La of the descending route RLd, for example. In the present example, the second lifter L2 does not place the transport vehicles V on the lifting platforms La of routes (ascending route RLu and pair of connecting routes RLc) of the annular route RL other than the descending route RLd. In other words, the second lifter L2 receives transport vehicles V from the second straight route R2 on the descending route RLd and delivers the transport vehicles V to the first straight route R1 on the descending route RLd. That is, the second lifter L2 delivers the transport vehicles V to the first straight route R1 before the transport vehicles V received from the second straight route R2 on the descending route RLd pass through the connecting routes RLc and the ascending route RLu. Note that the second lifter L2 is also able to place transport vehicles V on the lifting platforms La of the ascending route RLu and the connecting routes RLc in addition to the descending route RLd. That is, in the present example, one or more of the lifting platforms La of the second lifter L2 functions as storage sections for temporarily storing transport vehicles V. In this case, for example, the controller M (see FIG. 1) issues, to a specific transport vehicle V to be stored, a standby command that designates one of the lifting platforms La of the second lifter L2 and indicates to stand by on the designated lifting platform La.

As described above, in the present embodiment, the work area WA (article receiving area) in which the transport vehicles V receive articles G and the sorting area SA (article discharging area) in which the transport vehicles V discharge articles G are provided on the same travel floor F. Specifically, the work area WA and the sorting area SA are provided on the first travel floor F. In the present example, the transport vehicles V exit from the exit point of the second lifter L2 for use in lowering the transport vehicles V onto the first travel floor F and receive articles G in the work area WA. Thereafter, the transport vehicles V holding the articles G travel along the first straight route R1 toward the straight route first side X1 and discharge the articles G in the sorting area SA. The transport vehicles V then enter the first lifter L1 for use in raising the transport vehicles V from the first travel floor F and proceeds to the second travel floor F. The transport vehicles V exit from the exit point of the first lifter L1 for use in raising the transport vehicles V onto the second travel floor F, and travel along the second straight route R2 toward the straight route second side X2. The transport vehicles V then enter the second lifter L2 for use in lowering the transport vehicles V and proceed to the first travel floor F. In this way, the transport vehicles V circulate through the first and second travel floors F.

As described above, in the configuration in which the work area WA (article receiving area) in which the transport vehicles V receive the articles G and the sorting area SA (article discharging area) in which the transport vehicles V discharge the articles G are provided on the same travel floor F, the transport vehicles V complete transportation of the articles G on the same floor, and thus do not ride the first lifter L1 or the second lifter L2 while holding articles G. That is, the transport vehicles V are not holding articles G when riding either the first lifter L1 or the second lifter L2.

In the present embodiment, the work area WA (article receiving area) in which the transport vehicles V receive the articles G is provided adjacent to the exit point of a target lifter, which is either the first lifter L1 or the second lifter L2. In the present example, the second lifter L2 is the target lifter. The lifter that is not the target lifter out of the first lifter L1 and the second lifter L2 is a non-target lifter. In the present example, the first lifter L1 is the non-target lifter. The controller M (see FIG. 1) then controls the transport vehicles V on the travel floors F (first and second floors F) in such a manner that the number of transport vehicles V inside the target lifter (second lifter L2) is greater than or equal to the number of transport vehicles V inside the non-target lifter (first lifter L1).

According to such a configuration, the target lifter (second lifter L2) can accommodate a relatively large number of transport vehicles V, and thus the number of transport vehicles V that can arrive in the work area WA (article receiving area) provided at the exit point of the target lifter (second lifter L2) in a short time is readily increased. Accordingly, the possibility of having to wait for transport vehicles V in the work area WA (article receiving area) can be reduced, and the percentage of transport vehicles V currently transporting articles G out of total number of transport vehicles V in the facility can be increased. Thus, adopting such a configuration can contribute to improving the transport capacity of the facility as a whole.

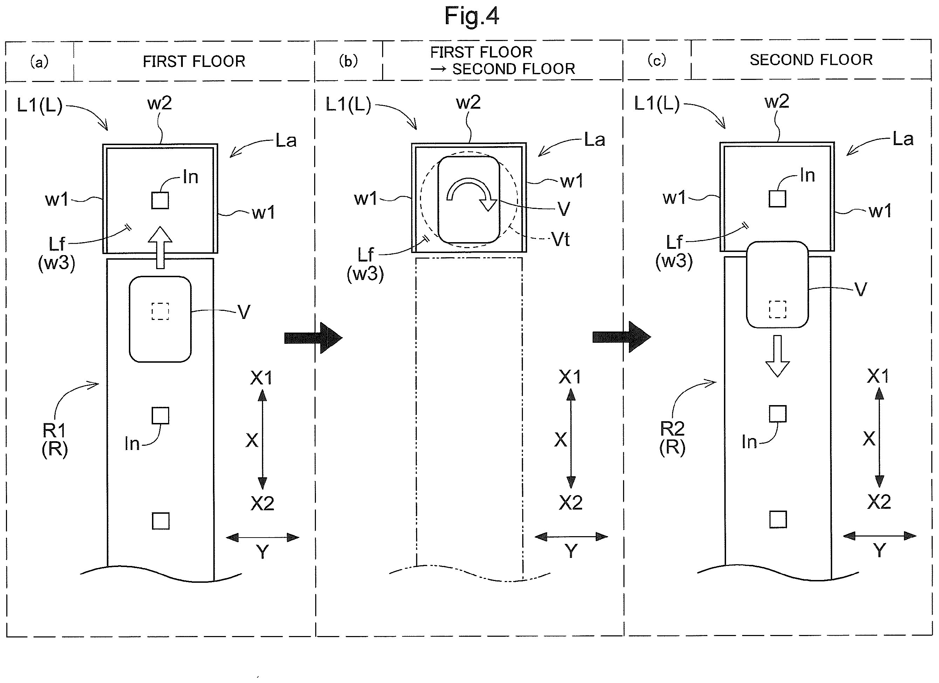

FIG. 4 is an illustrative diagram showing a transport vehicle V moving to a different travel floor F. Specifically, FIG. 4 shows a transport vehicle V using the first lifter L1 to move from the first travel floor F to the second travel floor F. Note that while FIG. 4 shows the surrounding structure of the first lifter L1, the surrounding structure of the second lifter L2 is similar. Accordingly, the surrounding structure of the second lifter L2 is not illustrated.

As shown in FIG. 4, the position information holding sections In are arranged in the straight route direction X on the first straight route R1 and the second straight route R2. The position information holding sections In are also provided on placement surfaces Lf of the lifting platforms La of the first lifter L1 and the second lifter L2 on which the transport vehicles V are placed. The transport vehicle V reads the position information holding sections In on the first straight route R1 or the second straight route R2 in order, while traveling. The transport vehicle V passes over the position information holding sections In to enter the first lifter L1 or the second lifter L2 or to exit the first lifter L1 or the second lifter L2.

At least in the vicinity of the lifters L, there is no space for two or more transport vehicles V to travel side-by-side in the route width direction Y on the first straight route R1 and the second straight route R2. That is, there is only space for one transport vehicle V to travel on the first straight route R1 and the second straight route R2 in the vicinity of the lifters L. Thus, the transport vehicles V that enter the lifters L in order to move to a different travel floor F need to exit the lifters L on the arrival floor in the opposite direction to the direction of entry. However, as described above, on the first straight route R1 and the second straight route R2 in the vicinity of the lifters L there is no space for the transport vehicles V to change direction in advance before entering the lifters L.

In view of this, in the article transport facility 100 according to the present disclosure, the transport vehicles V change direction by turning inside the lifters L. Specifically, when a transport vehicle V travels toward the straight route first side X1 and enters the lifter L (here, first lifter L1), the transport vehicle V turns 180 degrees inside the lifter L to face the straight route second side X2. On the arrival floor, the transport vehicle V then travels toward the straight route second side X2 and exits the lifter L (first lifter L1). Also, when a transport vehicle V travels to the straight route second side X2 and enters the lifter L (here, second lifter L2), the transport vehicle V turns 180 degrees inside the lifter L (second lifter L2) to face the straight route first side X1. On the arrival floor, the transport vehicle V travels toward the straight route first side X1 and exits the lifter L (second lifter L2). With such a configuration, the transport vehicle V is able to smoothly exit the lifter L on the arrival floor. Also, even if there was space in the vicinity of the lifters L for the transport vehicles V to change direction, by providing space for the transport vehicles V to change direction inside the lifters L, rather than using such space, as with the above configuration, the period during which the transport vehicles V are being raised and lowered by the lifters L can also be used for changing direction. Accordingly, the transport vehicles V can be moved efficiently.

As shown in FIG. 4, the lifting platforms La are larger than a turning locus Vt of the transport vehicles V that execute the turning operation, as viewed in the up-down direction. The transport vehicles V can thereby appropriately perform the turning operation even while being raised and lowered by the lifters L.

In the present embodiment, the lifting platforms La each include a pair of side walls w1 spaced apart in the route width direction Y, a back wall w2 disposed on the far side in the straight route direction X with respect to the entrance to the lifter L (straight route first side X1 in the illustrated example), and a bottom part w3 having the placement surface Lf on which the transport vehicles V are placed. In the present example, a position information holding section In is provided on the placement surface Lf of the bottom portion w3, and the pair of side walls w1 and the back wall w2 are disposed at positions that do not interfere with the turning locus Vt when the transport vehicles V turn at the position of the position information holding section In. The transport vehicles V are thereby able to appropriately perform the turning operation, without interfering with the pair of side walls w1 or the back wall w2 inside the lifters L.

The case where a transport vehicle V moves from the first straight route R1 (first travel floor F) to the second straight route R2 (second travel floor F) will now be described as an example. The transport vehicle V travels along the first straight route R1 to the straight route first side X1 past a plurality of position information holding sections In and enters the first lifter L1 for use in raising the transport vehicles V (see FIG. 4(a)). While ascending from the first floor to the second floor, the transport vehicle V turns inside the first lifter L1 and changes direction 180 degrees (see FIG. 4(b)). The transport vehicle V that faced the straight route first side X1 when entering the first lifter L1 thereby now faces the straight route second side X2, which is the opposite side thereto. The transport vehicle V, upon arriving at the second floor on which the second straight route R2 is provided, moves off toward the straight route second side X2 and exits the first lifter L1 (see FIG. 4(c)).

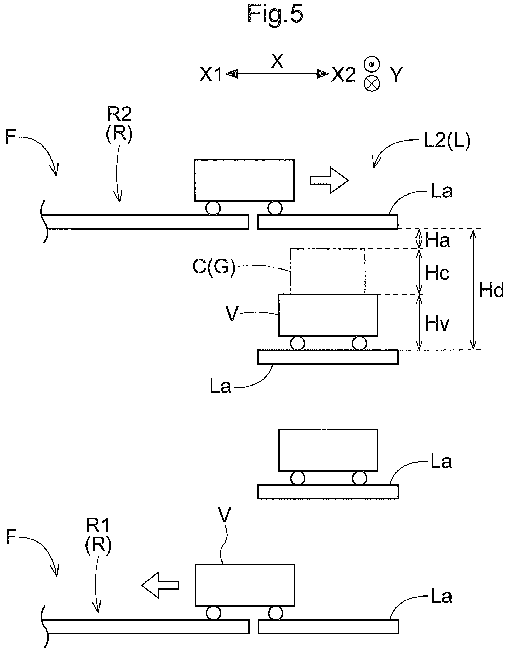

Here, as described above, in the present embodiment, the article receiving area (work area WA) in which the transport vehicles V receive the articles G and the article discharging area (sorting area SA) in which the transport vehicles V discharge the articles G are provided on the same floor. Thus, the transport vehicles V, in general, do not ride the lifters L while holding the articles G. However, in cases such as where the transport vehicles V do not discharge all of the articles G in the article discharging area, or where the article receiving area (work area WA) and the article discharging area (sorting area SA) are provided on different floors instead of on the same floor, the transport vehicles V need to ride the lifters L while holding the articles G. The article transport facility 100 according to the present disclosure is capable of handling such cases, and is able to appropriately move transport vehicles V that are holding articles G to another travel floor F. This will be described below with reference to FIG. 5.

FIG. 5 shows the spacing between the lifting platforms La of the lifters L and the positional relationship between the lifting platforms La and the travel floors F. Note that while FIG. 5 shows the structure of the second lifter L2, the structure of the first lifter L1 is similar. Accordingly, the structure of the first lifter L1 is not illustrated.

The present embodiment is configured such that a spacing Hd in the up-down direction between the lifting platforms La of the first lifter L1 and the second lifter L2 is greater than or equal to a length obtained by adding a margin Ha to a combined height (Hv+Hc) of a transport vehicle V and an article G when the transport vehicle V is holding the article G, and such that while one of the lifting platforms La is connected to the travel floor F on which the first straight route R1 is provided, another of the lifting platforms La is connected to the travel floor F on which the second straight route R2 is provided. Even if a transport vehicle V rides the lifter L while holding articles G, it is thereby possible to avoid the articles G interfering with another lifting platform La adjacent on the upper side of the lifting platform La on which the transport vehicle V is riding. Also, while one of the lifting platforms La is connected to one travel floor F, another of the lifting platforms La is connected to another travel floor F, thus enabling a transport vehicle V to enter a lifter L on one floor at the same time as another transport vehicle V exits the same lifter L on a different floor.

As described above, the transport vehicles V are also able to transport the articles G directly rather than housed in a container C, but may transport the articles G housed in a container C together with the container C. In the present embodiment, the spacing Hd in the up-down direction between the lifting platforms La of the first lifter L1 and the second lifter L2 is set to be greater than or equal to a length obtained by adding a margin Ha to the height Hv of the transport vehicle V and the height Hc of the container C. Even if a transport vehicle V rides the lifter L while holding the container C, it is thereby possible to avoid the container C interfering with another lifting platform La adjacent on the upper side of the lifting platform La on which the transport vehicle V is riding.

### [Other Embodiments]

Next, other embodiments of the article transport facility will be described.
(1) In the above embodiment, an example is described in which the first lifter L1 and the second lifter L2 each circulate the lifting platforms La along the predetermined annular route RL. However, the present disclosure is not limited to such an example, and at least either the first lifter L1 or the second lifter L2 may be configured to reciprocate the lifting platforms La using one lifting route.
(2) In the above embodiment, an example is described in which the first lifter L1 and the second lifter L2 each move the lifting platforms La in only one direction along the annular route RL. However, the present disclosure is not limited to such an example, and at least either the first lifter L1 or the second lifter L2 may be configured to move the lifting platforms La in both directions along the annular route RL.
(3) In the above embodiment, an example is described in which the first lifter L1 is set to raise the transport vehicles V and the second lifter L2 is set to lower the transport vehicles V. However, the present disclosure is not limited to such an example, and the first lifter L1 may be used for both raising and lowering the transport vehicles V. Also, the second lifter L2 may be used for both raising and lowering the transport vehicles V.
(4) In the above embodiment, an example is described in which one or more of the lifting platforms La of both the first lifter L1 and the second lifter L2 function as storage sections for temporarily storing transport vehicles V. However, the present disclosure is not limited to such an example, and the first lifter L1 and the second lifter L2 need only function to raise and lower the transport vehicles V, and need not have a function for storing transport vehicles V.
(5) In the above embodiment, an example is described in which while one of the lifting platforms La is connected to a travel floor F, another of the lifting platforms La is connected to another travel floor F. However, the present disclosure is not limited to such an example, and while one of the lifting platforms La is connected to a travel floor F, another of the lifting platforms La need not be connected to another travel floor F.
(6) Note that the configurations disclosed in the above-described embodiments can also be applied in combination with configurations disclosed in other embodiments as long as no inconsistencies arise. The embodiments disclosed herein are merely illustrative in all respects, in relation also to other configurations. Accordingly, various modifications can be made as appropriate, within a range that does not depart from the gist of the present disclosure.

### [Outline of the Embodiments]

Hereinafter, the above article transport facility will be described.

An article transport facility including:
a plurality of travel floors arranged in an up-down direction;
at least one transport vehicle configured to transport an article by traveling on the travel floors;
a straight route provided on each of the travel floors, and along which the at least one transport vehicle travels straight; and
a pair of a first lifter and a second lifter configured to raise and lower the at least one transport vehicle between the travel floors,
the at least one transport vehicle being configured to travel straight and to change direction by executing a turning operation for turning at a current position around an axis extending in the up-down direction,
the straight routes provided on a pair of the travel floors adjacent to each other in the up-down direction respectively being a first straight route and a second straight route,
the first straight route and the second straight route being parallel to each other, and a direction in which the at least one transport vehicle travels along the first straight route and a direction in which the at least one transport vehicle travels along the second straight route being set to be opposite to each other,
the at least one transport vehicle on the first straight route traveling toward a straight route first side, and the at least one transport vehicle on the second straight route traveling toward a straight route second side,
the first lifter being configured to connect an end portion of the first straight route on the straight route first side to an end portion of the second straight route on the straight route first side,
the second lifter being configured to connect an end portion of the first straight route on the straight route second side to an end portion of the second straight route on the straight route second side,
the first lifter and the second lifter each including at least one lifting platform configured to have the at least one transport vehicle placed thereon, and
the at least one lifting platform being larger than a turning locus of the at least one transport vehicle that executes the turning operation, as viewed in the up-down direction.

According to the present configuration, the transport vehicle is able to prepare in advance for moving off on the arrival floor by performing the turning operation while being raised and lowered by the lifters. The transport vehicle is thus able to smoothly move off on the arrival floor. Also, according to the present configuration, the lifting platform of the lifter is larger than the turning locus of the transport vehicle as viewed in the up-down direction. Thus, the transport vehicle is able to appropriately perform the turning operation even while being raised and lowered by the lifters.

Preferably the at least one lifting platform of each of the first lifter and the second lifter comprises a plurality of lifting platforms, and the first lifter and the second lifter are each configured to circulate the lifting platforms along a predetermined annular route.

According to this configuration, a plurality of transport vehicles can be raised and lowered in parallel by the first lifter and the second lifter. Accordingly, the efficiency with which the transport vehicles are circulated between different floors can be improved.

Preferably the first lifter and the second lifter are each configured to move the lifting platforms in only one direction along the annular route,
the annular route includes an ascending route that raises the lifting platforms, a descending route that lowers the lifting platforms, and a pair of arc-shaped connecting routes connecting the descending and ascending routes at both ends thereof in the up-down direction,
the first lifter is set to raise the at least one transport vehicle, and places the at least one transport vehicle only on the lifting platforms of the ascending route, and
the second lifter is set to lower the at least one transport vehicle, and places the at least one transport vehicle only on the lifting platforms of the descending route.

According to the present configuration, the roles of the first lifter and the second lifter are separated into raising and lowering the transport vehicle, and each of the lifting platforms is moved to only either ascend or descend with the transport vehicle placed thereon, and thus the direction in which the transport vehicle is raised and lowered in each lifter can be set to one direction. Accordingly, the efficiency with which the transport vehicle is moved in each lifter is readily enhanced, compared to the case where the lifting platforms are moved reciprocally. Here, in the case of a lifter that moves the lifting platforms along an annular route, depending on the structure of the annular route, the lifting platforms may vibrate greatly when passing through the highest or lowest position (switchover point between ascending and descending) of the annular route, and the transport vehicles are readily displaced on the lifting platforms. However, according to the present configuration, the transport vehicles placed on the lifting platforms only pass along the ascending route in the first lifter and only pass along the descending route in the second lifter. Since the transport vehicles can thereby be configured to not pass through the top or bottom position of the annular route, problems such as the above are unlikely to occur.

Preferably the article transport facility further includes:
a controller configured to control the at least one transport vehicle, which comprises a plurality of transport vehicles; and
an article receiving area in which the transport vehicles receive the article and provided adjacent to an exit point of a target lifter which is either the first lifter or the second lifter,
the first lifter or the second lifter that is not the target lifter is a non-target lifter, and
the controller controls the transport vehicles on the travel floors such that the transport vehicles inside the target lifter are greater than or equal in number to the transport vehicles inside the non-target lifter.

According to the present configuration, the target lifter is able to accommodate a relatively large number of transport vehicles, and thus the number of transport vehicles that can arrive at the article receiving area provided at the exit point of the target lifter in a short time is readily increased. Accordingly, the possibility of having to wait for transport vehicles in the article receiving area can be reduced, and the percentage of transport vehicles currently transporting articles out of the total number of transport vehicles in the facility can be increased. Thus, adopting such a configuration can contribute to improving the transport capacity of the facility as a whole.

Preferably the at least one lifting platform of each of the first lifter and the second lifter comprises a plurality of lifting platforms, and
one or more of the lifting platforms of each of the first lifter and the second lifter function as storage sections configured to temporarily store the at least one transport vehicle.

According to this configuration, in cases such as when it is not possible to secure a place for storing transport vehicles that are not operating, one or more of the lifting platforms of the lifters can be used as storage sections for storing the transport vehicles. For example, when the facility is not fully operational (including when in hibernation), such as during the night, it is advantageous to utilize one or more of the lifting platforms as storage sections for storing transport vehicles.

Preferably the article transport facility further includes an article receiving area in which the at least one transport vehicle receives the article, and an article discharging area in which the at least one transport vehicle discharges the article, the travel floor on which the article receiving area is provided being the travel floor on which the article discharging area is provided.

According to the present configuration, the transport vehicle is able to complete the receipt and discharge of articles on the same floor, and can thus be prevented from riding the lifters while holding articles. Accordingly, the articles can be protected from vibration during raising and lowering by the lifters. Also, the lifters can be designed without considering the dimensions of the articles transported by the transport vehicle, and thus the lifters can be readily reduced in size.

Preferably the at least one lifting platform of each of the first lifter and the second lifter comprises a plurality of lifting platforms, and
the lifting platforms of each of the first lifter and the second lifter are spaced apart from each other in the up-down direction by greater than or equal to a length obtained by adding a margin to a combined height of the at least one transport vehicle and the article when the at least one transport vehicle is holding the article, and while one of the lifting platforms is connected to the travel floor on which the first straight route is provided, another of the lifting platforms is connected to the travel floor on which the second straight route is provided.

According to the present configuration, even if the transport vehicle rides the lifter while holding the article, it is possible to avoid the article interfering with another lifting platform adjacent on the upper side of the lifting platform on which the transport vehicle is riding. Also, according to the present configuration, it is possible for a transport vehicle to enter a lifter on one floor at the same time as another transport vehicle exits the same lifter on a different floor.

Preferably the at least one transport vehicle is configured to read position information held in a plurality of position information holding sections provided on the travel floors, while traveling on the travel floors, and to execute the turning operation at positions corresponding to the position information holding sections, and
the position information holding sections are also provided on a placement surface of the at least one lifting platform of the first lifter and the second lifter on which the at least one transport vehicle is to be placed.

According to the present configuration, the transport vehicle is able to perform a turning operation on the lifting platform, based on the position of the position information holding section provided on the placement surface of the lifting platform. Accordingly, an appropriate turning operation of the transport vehicle on the lifting platform is readily realized.

### Industrial Applicability

The technology according to the present disclosure can be utilized in an article transport facility that includes a plurality of travel floors arranged in the up-down direction and a transport vehicle that transports articles by traveling on the travel floors.

### Description of Reference Signs

100: Article transport facility
F: Travel floor
In: Position information holding section
L: Lifter
L1: First lifter
L2: Second lifter
La: Lifting platform
Lf: Placement surface
RL: Annular route
RLc: Connecting route
RLd: Descending route
RLu: Ascending route
R: Straight route
R1: First straight route
R2: Second straight route
M: Controller
V: Transport vehicle
Vt: Turning locus
G: Article
Hv: Height of transport vehicle
Hc: Height of article
Ha: Margin
X1: Straight route first side
X2: Straight route second side

## Claims

1. An article transport facility comprising:
a plurality of travel floors arranged in an up-down direction;
at least one transport vehicle configured to transport an article by traveling on the travel floors;
a straight route provided on each of the travel floors, and along which the at least one transport vehicle travels straight; and
a pair of a first lifter and a second lifter configured to raise and lower the at least one transport vehicle between the travel floors,
the at least one transport vehicle being configured to travel straight and to change direction by executing a turning operation for turning at a current position around an axis extending in the up-down direction,
the straight routes provided on a pair of the travel floors adjacent to each other in the up-down direction respectively being a first straight route and a second straight route,
the first straight route and the second straight route being parallel to each other, and a direction in which the at least one transport vehicle travels along the first straight route and a direction in which the at least one transport vehicle travels along the second straight route being set to be opposite to each other,
the at least one transport vehicle on the first straight route traveling toward a straight route first side, and the at least one transport vehicle on the second straight route traveling toward a straight route second side,
the first lifter being configured to connect an end portion of the first straight route on the straight route first side to an end portion of the second straight route on the straight route first side,
the second lifter being configured to connect an end portion of the first straight route on the straight route second side to an end portion of the second straight route on the straight route second side,
the first lifter and the second lifter each including at least one lifting platform configured to have the at least one transport vehicle placed thereon, and
the at least one lifting platform being larger than a turning locus of the at least one transport vehicle that executes the turning operation, as viewed in the up-down direction.

2. The article transport facility according to claim 1,
wherein the at least one lifting platform of each of the first lifter and the second lifter comprises a plurality of lifting platforms, and the first lifter and the second lifter are each configured to circulate the lifting platforms along a predetermined annular route.

3. The article transport facility according to claim 2,
wherein the first lifter and the second lifter are each configured to move the lifting platforms in only one direction along the annular route,
the annular route includes an ascending route that raises the lifting platforms, a descending route that lowers the lifting platforms, and a pair of arc-shaped connecting routes connecting the descending and ascending routes at both ends thereof in the up-down direction,
the first lifter is set to raise the at least one transport vehicle, and places the at least one transport vehicle only on the lifting platforms of the ascending route, and
the second lifter is set to lower the at least one transport vehicle, and places the at least one transport vehicle only on the lifting platforms of the descending route.

4. The article transport facility according to claim 3, further comprising:
a controller configured to control the at least one transport vehicle, which comprises a plurality of transport vehicles; and
an article receiving area in which the transport vehicles receive the article and provided adjacent to an exit point of a target lifter which is either the first lifter or the second lifter,
the first lifter or the second lifter that is not the target lifter is a non-target lifter, and
the controller controls the transport vehicles on the travel floors such that the transport vehicles inside the target lifter are greater than or equal in number to the transport vehicles inside the non-target lifter.

5. The article transport facility according to claim 1,
wherein the at least one lifting platform of each of the first lifter and the second lifter comprises a plurality of lifting platforms, and
one or more of the lifting platforms of each of the first lifter and the second lifter function as storage sections configured to temporarily store the at least one transport vehicle.

6. The article transport facility according to any one of claims 1 to 5, further comprising:
an article receiving area in which the at least one transport vehicle receives the article, and an article discharging area in which the at least one transport vehicle discharges the article, the travel floor on which the article receiving area is provided being the travel floor on which the article discharging area is provided.

7. The article transport facility according to any one of claims 1 to 5,
wherein the at least one lifting platform of each of the first lifter and the second lifter comprises a plurality of lifting platforms, and
the lifting platforms of each of the first lifter and the second lifter are spaced apart from each other in the up-down direction by greater than or equal to a length obtained by adding a margin to a combined height of the at least one transport vehicle and the article when the at least one transport vehicle is holding the article, and while one of the lifting platforms is connected to the travel floor on which the first straight route is provided, another of the lifting platforms is connected to the travel floor on which the second straight route is provided.

8. The article transport facility according to any one of claims 1 to 5,
wherein the at least one transport vehicle is configured to read position information held in a plurality of position information holding sections provided on the travel floors, while traveling on the travel floors, and to execute the turning operation at positions corresponding to the position information holding sections, and
the position information holding sections are also provided on a placement surface of the at least one lifting platform of the first lifter and the second lifter on which the at least one transport vehicle is to be placed.
